## Europäisches Patentamt
## European Patent Office
## Office européen des brevets

(11) Numéro de publication: **0 211 786 B1**

(12) **FASCICULE DE BREVET EUROPEEN**

(45) Date de publication du fascicule du brevet:
**24.05.89**

(51) Int. Cl.⁴: **D 21 H 5/00, B 05 D 1/12, B 05 D 1/36, B 65 D 85/76**

(21) Numéro de dépôt: **86440065.0**

(22) Date de dépôt: **31.07.86**

(54) **Procédé de fabrication d'un emballage, en particulier pour fromage à pâte molle, et emballage ainsi obtenu.**

(30) Priorité: **01.08.85 FR 8511926**

(43) Date de publication de la demande:
**25.02.87 Bulletin 87/9**

(45) Mention de la délivrance du brevet:
**24.05.89 Bulletin 89/21**

(84) Etats contractants désignés:
**AT BE CH DE FR GB IT LI LU NL SE**

(56) Documents cités:
**CH-A- 553 674
DE-C- 454 838
FR-A- 2 255 421
FR-A- 2 300 843
FR-A- 2 500 019**

(73) Titulaire: **Raymond Morin, S.A., 3 Avenue Poincaré, F-57400 Sarrebourg (FR)**

(72) Inventeur: **Levy, Jean-Paul, Rue de la Chapelle, F-57400 Sarrebourg (FR)**

(74) Mandataire: **Nuss, Pierre, 10, rue Jacques Kablé, F-67000 Strasbourg (FR)**

ACTORUM AG

## Description

La présente invention concerne la fabrication d'emballages, en particulier pour fromage à pâte molle, et a pour objet un procédé de fabrication d'un tel emballage. L'invention a également pour objet un emballage ainsi obtenu.

On sait que les fromages à pâte molle comme le brie, le camembert ou le coulommiers, sont des produits vivants qui doivent s'affiner de manière correcte jusqu'à la consommation, cette dernière intervenant parfois trente jours ou plus après emballage, selon le produit.

Durant cet affinage, le fromage rejette de la vapeur d'eau et du gaz carbonique et absorbe de l'oxygène. Les feuilles d'emballage des fromages doivent donc être suffisamment perméables à ces gaz, ainsi qu'à la vapeur d'eau, afin d'assurer une bonne évolution du produit dans le temps.

L'évolution dans le temps d'un fromage à pâte molle dépend, d'une manière générale:

— de sa composition initiale, c'est-à-dire du pourcentage d'extrait sec et de matière grasse,

— du type de fabrication, c'est-à-dire de l'emploi de lait cru ou pasteurisé, à pâte stabilisée ou solubilisée,

— des conditions d'affinage, c'est-à-dire de la température et de l'humidité relative,

— des conditions de stockage, c'est-à-dire des variations de température et d'hygrométrie,

— des échanges thermiques et des échanges gazeux avec le milieu ambiant après conditionnement, particulièrement d'eau, d'oxygène, de gaz carbonique et d'ammoniaque.

Le matériau utilisé ne doit pas être imperméable à la vapeur d'eau, car sinon, il favorise la protéolyse et accélère le processus de dégradation, ce qui donne alors un produit inconsommable.

Un tel matériau peut également entraîner l'apparition de condensation d'eau en surface et entraîner une lyse de la flore microbienne mise en évidence par un jaunissement de la fleur.

En revanche, si le matériau utilisé est trop perméable, il entraîne une dessiccation en surface, une concentration plus élevée en sel, une perte de poids trop importante, un affinage incomplet, et l'apparition d'une certaine concavité préjudiciable à l'aspect général.

S'il est donc essentiel que l'emballage utilisé soit perméable à la vapeur d'eau, il est nécessaire que ce passage de vapeur d'eau soit contrôlé.

On utilise le plus souvent, pour l'emballage des fromages à pâte molle, un papier enduit d'une couche de paraffine, qui possède des coefficients de perméabilité à la vapeur d'eau et aux gaz adaptés à ce type de fromage.

Parmi les emballages connus, les complexes pellicule cellulosique/papier paraffiné donnent les meilleurs résultats du point de vue conservation, affinage et présentation du produit emballé. Mais les pellicules cellulosiques, en général revêtues d'un enduit nitrocellulosique, ont une perméabilité à la vapeur d'eau mal adaptée et, malgré l'introduction de paraffine ou malgré la perforation desdites pellicules, les fromages ont une mauvaise évolution dans le temps, car des moisissures indésirables apparaissent en certains points de la croûte du fromage, ainsi que la mort de la fleur de surface, du fait d'une condensation de vapeur d'eau plus important en certains points. On a alors pensé à introduire des particules de caséine ou d'amidon dans la pellicule cellulosique, car ces particules organiques de qualité alimentaire, absorbent la vapeur d'eau issue du fromage et la répartissent de façon homogène sur toute la pellicule, en évitant ainsi une condensation d'eau préjudiciable à une bonne maturation du fromage. De plus, de telles pellicules présentent une surface irrégulière du fait des particules de caséine ou d'amidon, ménageant ainsi un faible espace entre la croûte du fromage et l'enduction elle-même, ceci facilitant la circulation de l'air. De telles pellicules cellulosiques sont décrites dans la demande de brevet français n° 78 20 248 (EP-A-0 008 961). Néanmoins, ces pellicules cellulosiques ont de nombreux inconvénients, dont les principaux sont les suivantes:

— pellicule non opaque, ce qui a pour effet que le client refuse ce type de produit car il peut voir certains défauts du fromage à travers l'emballage,

— tendance au décollement de la laque sur le fromage, d'où obligation d'imprimer à l'extérieur de l'emballage afin d'éviter des problèmes de décalcomanie de la pellicule sur le fromage, ce qui supprime son aspect brillant,

— passage en machine de conditionnement difficile, car la pellicule cellulosique est du type monocomposant, donc trop souple,

— pellicule cellulosique très fragile car du type monocomposant.

Il a été proposé d'obvier à ces inconvénients en réalisant, en particulier selon FR-A-2 500 019, un emballage monocouche sous forme d'un papier enduit d'une couche hétérogène, comportant des particules de caséine, d'amidon ou de dérivés cellulosiques. L'emballage obtenu par application du procédé décrit dans le document précrité présente cependant certains inconvénients, à savoir, d'une part, la difficulté d'obtenir un mélange parfaitement homogène, ce qui entraîne un dépôt irrégulier des particules sur le papier, et, d'autre part, du fait que les particules sont enrobées par le liant, l'absorption d'eau est limitée, et la condensation ne peut pas être évitée.

Par ailleurs, on connaît par FR-A-2 255 421 un mode de réalisation d'un emballage pour câbles électriques comportant une couche intermédiaire présentant des particules hydrophiles et placée entre deux bandes de papier, les particules n'étant pas directement en contact du produit.

Enfin, FR-A-2 300 843 décrit un procédé de couchage pour papier destiné à la fabrication de billets de banques, dans lequel un mélange de polymères et d'amidon est appliqué avant calandrage sur du papier. Un tel procédé de fabrication n'est cependant pas applicable à la réalisation d'emballage comportant une couche hydrophile.

La présente invention a pour but de pallier ces inconvénients.

Elle a, en effet, pour objet un procédé de fabrication d'un emballage, en particulier pour fromage à pâte molle, composé d'au moins un papier dont la face, côté fromage est enduite, soit d'une couche de paraffine ou de cire, soit d'une couche de laque ou de vernis, caractérisé en ce qu'il consiste à pulvériser ou à tamiser, soit sur la couche de paraffine ou de cire, soit sur la couche de laque ou de vernis, des particules organiques de caséine ou d'amidon, dont le diamètre moyen est compris entre 4 µm et 22 µm, afin de permettre le contrôle du passage de la vapeur d'eau à travers l'emballage, la pulvérisation ou le tamisage étant réalisés, soit directement après application des couches de paraffine ou de cire, ou de laque ou de vernis, avant cristallisation ou séchage desdites couches, soit, dans le cas d'un emballage muni au préalable d'une couche de paraffine ou de cire sur la face du papier, après chauffage de ladite couche.

L'invention sera mieux comprise, grâce à la description ci-après d'un mode de réalisation préféré, donné à titre d'exemple non limitatif, et expliqué avec référence aux dessins schématiques annexés, dans lesquels:

la figure 1 est une vue en coupe d'un emballage conforme à l'invention;

la figure 2 est une vue en coupe d'un dispositif de mise en oeuvre du procédé conforme à l'invention, et

la figure 3 est une vue en coupe d'une variante de réalisation du dispositif suivant la figure 2.

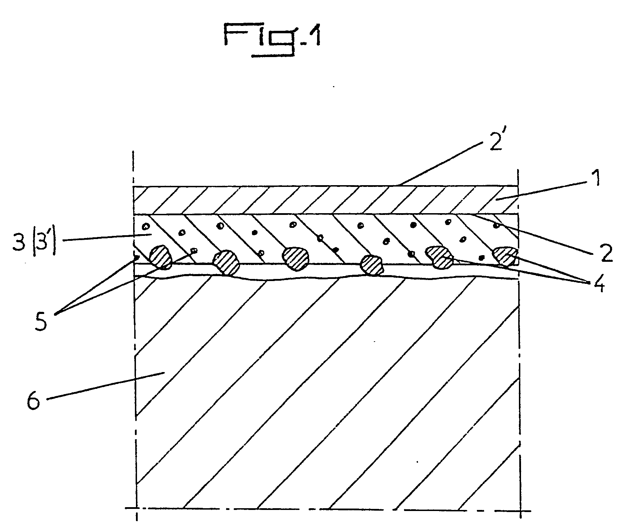

Le procédé de fabrication de l'emballage, en particulier pour fromage à pâte molle, composé d'au moins un papier 1 dont la face 2, côté fromage 6, est enduite, soit d'une couche de paraffine ou de cire 3, soit d'une couche de laque ou de vernis 3', est caractérisé en ce qu'il consiste à pulvériser ou à tamiser, soit sur la couche de paraffine ou de cire 3, soit sur la couche de laque ou de vernis 3', des particules organiques 4 de caséine ou d'amidon, dont le diamètre moyen est compris entre 4 µm et 22 µm, afin de permettre le contrôle du passage de la vapeur d'eau à travers l'emballage, la pulvérisation ou le tamisage étant réalisés, soit directement après application des couches de paraffine ou de cire 3, ou de laque ou de vernis 3', avant cristallisation ou séchage desdites couches 3 ou 3', soit, dans le cas d'un emballage muni au préalable d'une couche de paraffine ou de cire 3 sur la face 2 du papier 1, après chauffage de ladite couche 3 (figure 1).

Le procédé de préparation des particules d'amidon et de caséine est connu.

Ainsi, le fait de déposer par pulvérisation ou tamisage les particules d'amidon et de caséine 4 sur une couche de paraffine ou de cire 3, de laque ou de vernis 3', enduite sur un papier 1, les particules d'amidon ou de caséine étant ainsi directement en contact avec le fromage 6, permet de supprimer tous les inconvénients de pellicules cellulosiques contenant des particules de caséine ou d'amidon, car on obtient un emballage dont le passage de la vapeur d'eau peut être contrôlé, et étant, en outre, opaque, brillant, pouvant être imprimé sans risque de décalcomanie sur le fromage, et suffisamment rigide et solide.

Selon une autre caractéristique de l'invention, des particules polymères sont introduites dans le bain de paraffine ou de cire, de laque ou de vernis.

En effet, les particules de caséine et d'amidon 4 sont très hydrophiles et en absorbant la vapeur d'eau, elles augmentent de volume, font éclater les molécules de paraffine, augmentant ainsi parfois la perméabilité du papier aux gaz et à la vapeur d'eau.

Afin de compenser cette perméabilité, parfois devenue trop importante, il peut s'avérer nécessaire, d'introduire simultanément des particules polymères 5 afin de réduire à nouveau quelque peu la perméabilité du papier 1. Ceci est fonction du type de fromage 6 et des pertes de poids souhaitées afin d'obtenir un produit ayant une présentation et un affinage corrects.

Il est également possible, bien entendu, de diminuer les éventuelles perforations des autres films composant l'emballage, s'il y en a, ou de modifier leur composition en choisissant des matières synthétiques moins étanches.

Selon le mode de réalisation de l'invention, le procédé de fabrication consiste à ajouter éventuellement les particules polymères 5 dans un bain de paraffine ou de cire, de laque ou de vernis, dans une proportion de 1 à 25% en poids, plus précisement de 5 à 15%, à enduire de ce bain de paraffine ou de cire, de laque ou de vernis, la face 2 du papier 1 dont le grammage est compris entre 18 et 50 g/m$^2$, l'enduction ayant lieu dans une proportion de 4 à 15 g/m$^2$, à déposer sur la couche de paraffine ou de cire 3, de laque ou de vernis 3', des particules organiques hydrophiles 4 de caséine ou d'amidon dans une proportion de 0,5 g/m$^2$, jusqu'à 6 g/m$^2$, plus précisément de 1 g/m$^2$ à 3 g/m$^2$, par pulvérisation ou par tamisage.

Ainsi, on obtient un papier 1 formant l'emballage, et enduit sur l'une de ses faces, de la couche 3 ou 3'. L'emballage peut être constitué de ce seul papier enduit 1. Mais il est également possible d'utiliser ce papier paraffiné 1 en association avec d'autres films.

Selon une caractéristique de l'invention, le procédé consiste à coller partiellement, par raies de colle ou de cire, la face 2' opposée à la face 2 du papier enduit 1, soit sur un autre papier, soit sur une pellicule cellulosique, perforée ou non perforée, soit sur un complexe aluminium-papier perforé ou non perforé, soit enfin sur un film polymère, perforé ou non perforé, métallisé ou non métallisé, monocouche ou multicouche.

Selon une autre caractéristique de l'invention, le procédé consiste à assembler sur la totalité de la face 2' opposée à la face 2 du papier enduit 1, par colle ou par cire, une feuille d'aluminium, perforée ou non perforée.

Conformément à une autre caractéristique de l'invention, la température de la paraffine ou de cire 3, lors de l'application par pulvérisation ou tamisage des particules hydrophiles 4 de caséine ou d'amidon, est régulée entre 55°C et 65°C, de préférence entre 55°C et 60°C.

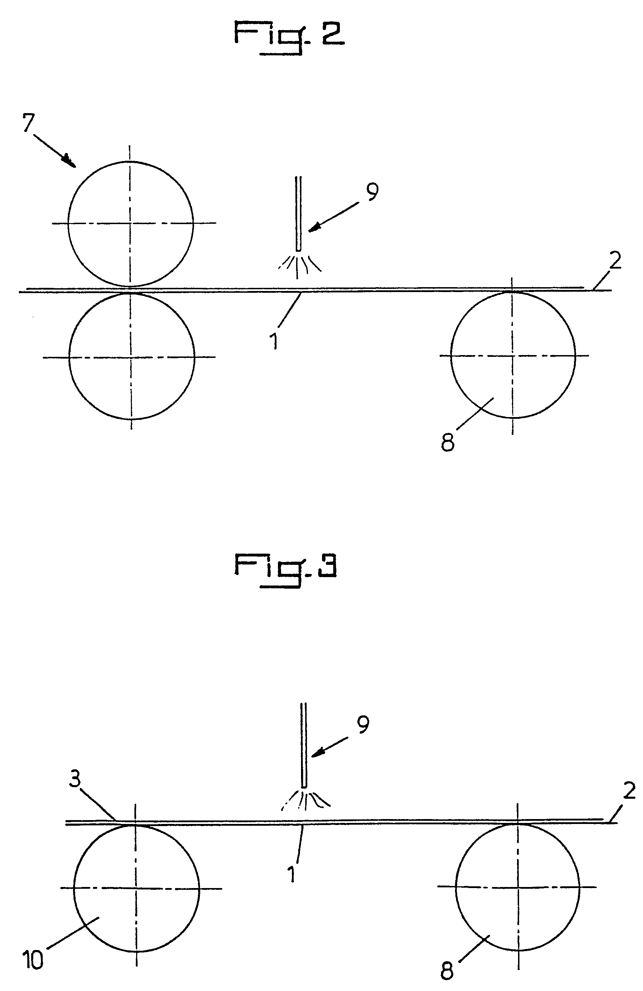

Dans le cas où l'application des particules 4 s'effectue directement après l'enduction de la face 2 du papier 1, cette régulation de température est réalisée directement au niveau de la machine d'enduction 7, un cylindre refroidisseur 8 parachevant la cristallisation de la paraffine ou de cire après le poste de tamisage ou de pulvérisation 9 (figure 2).

Dans le cas d'utilisation d'un papier 1 muni au préalable sur sa face 2 d'une couche 3 de paraffine ou de cire, cette dernière est avantageusement chauffée par passage sur un cylindre chauffant 10 disposé avant le poste 9 de tamisage ou de pulvérisation, qui est suivi d'un cylindre refroidisseur 8 (figure 3).

Grâce à ce mode de réalisation, il est possible d'utiliser des rouleaux de papier préalablement enduit de paraffine ou de cire.

La température du cylindre chauffant 10 est avantageusement comprise entre 70°C et 90°C, de préférence entre 75°C et 80°C.

Selon une autre caractéristique de l'invention, le chauffage de la couche 3 de paraffine ou de cire peut être réalisé par passage du papier 1 avec la couche 3, dans un dispositif de chauffage par rayonnement (non représenté) disposé avant le poste 9 de tamisage ou de pulvérisation. Ce dispositif de chauffage par rayonnement peut être sous forme de résistances chauffantes, de lampes infrarouges, etc.

En outre, l'ensemble papier 1 - couche de cire ou de paraffine 3 passe avantageusement sur le cylindre chauffant 10 ou dans le dispositif de chauffage par rayonnement à une vitesse comprise entre 120 m/min et 150 m/min.

Le mode d'application des particules hydrophiles 4 sur les couches 3 ou 3' permet de supprimer les inconvénients des emballages connus à ce jour dans lesquels lesdites particules hydrophiles sont appliquées ensemble avec la couche et sont donc noyées dans la couche.

L'invention a également pour objet un emballage obtenu selon le procédé conforme à l'invention, emballage composé d'au moins un papier 1 dont la face 2, côté fromage 6 est enduite, soit d'une couche de paraffine ou de cire 3, soit d'une couche de laque ou de vernis 3', caractérisé en ce que la couche 3 ou 3' comprend en surface des particules organiques hydrophiles 4 de caséine ou d'amidon, dont le diamètre moyen est compris entre 4 µm et 22 µm, et qui sont en contact avec le fromage 6.

Selon une autre caractéristique de l'invention, la couche 3 ou 3' comprend des particules polymères 5.

## Revendications

1. Procédé de fabrication d'un emballage, en particulier pour fromage à pâte molle, composé d'au moins un papier (1) dont la face (2), côté fromage (6), est enduite, soit d'une couche de paraffine ou de cire (3), soit d'une couche de laque ou de vernis (3'), caractérisé en ce qu'il consiste à pulvériser ou à tamiser, soit sur la couche de paraffine ou de cire (3), soit sur la couche de laque ou de vernis (3'), des particules organiques (4) de caséine ou d'amidon, dont le diamètre moyen est compris entre 4 µm et 22 µm, afin de permettre le contrôle du passage de la vapeur d'eau à travers l'emballage, la pulvérisation ou le tamisage étant réalisés, soit directement après application des couches de paraffine ou de cire (3), ou de laque ou de vernis (3') avant cristallisation ou séchage desdites couches (3 ou 3'), soit, dans le cas d'un emballage muni au préalable d'une couche de paraffine ou de cire (3) sur la face (2) du papier (1), après chauffage de ladite couche (3).

2. Procédé de fabrication d'un emballage selon la revendication 1, caractérisé en ce que des particules polymères (5) sont introduites dans le bain de paraffine ou de cire, de laque ou de vernis.

3. Procédé de fabrication d'un emballage selon l'une quelconque des revendications 1 ou 2, caractérisé en ce qu'il consiste à ajouter éventuellement les particules polymères (5) dans un bain de paraffine ou de cire, de laque ou de vernis, dans une proportion de 1 à 25% en poids, plus précisément de 5 à 15%, enduire de ce bain de paraffine ou de cire, de laque ou de vernis, du papier (1) dont le grammage est compris entre 18 et 50 g/m$^2$, l'enduction ayant lieu dans une proportion de 4 à 15 g/m$^2$, à déposer sur la couche de paraffine ou de cire, de laque ou de vernis, des particules organiques hydrophiles (4) de caséine ou d'amidon dans une proportion de 0,5 g/m$^2$ jusqu'à 6 g/m$^2$, plus précisément de 1 g/m$^2$ à 3 g/m$^2$, par pulvérisation ou par tamisage.

4. Procédé de fabrication d'un emballage selon la revendication 3, caractérisé en ce qu'il consiste à coller partiellement, par raies de colle ou de cire, la face (2') opposée à la face (2) du papier enduit (1), soit sur un autre papier, soit sur une pellicule cellulosique, perforée ou non perforée, soit sur un complexe aluminium-papier perforé ou non perforé, soit enfin sur un film polymère, perforé ou non perforé, métallisé ou non métallisé, monocouche ou multicouche.

5. Procédé de fabrication d'un emballage selon la revendication 3, caractérisé en ce qu'il consiste à assembler sur la totalité de la face (2') opposée à la face (2) du papier enduit (1), par colle ou par cire, une feuille d'aluminium, perforée ou non perforée.

6. Procédé, suivant l'une quelconque des revendications 1 à 5, caractérisé en ce que la température de la paraffine ou de la cire (3), lors de l'application par pulvérisation ou tamisage des particules hydrophiles (4) de caséine ou d'amidon, est régulée entre 55°C et 65°C, de préférence entre 55°C et 60°C.

7. Procédé, suivant la revendication 6, caractérisé en ce que la régulation de température est réalisée directement au niveau de la machine d'enduction (7), un cylindre refroidisseur (8) parachevant la cristallisation de la paraffine ou de la cire après le poste de tamisage ou de pulvérisation (9).

8. Procédé, suivant la revendication 1, caractérisé en ce que, dans le cas d'utilisation d'un papier (1) muni au préalable sur sa face (2) d'une couche (3) de paraffine ou de cire, cette dernière est avantageusement chauffée par passage sur un cylindre chauffant (10) disposé avant le poste (9) de tamisage ou de pulvérisation, qui est suivi d'un cylindre refroidisseur (8).

9. Procédé, suivant la revendication 8, caractérisé en ce que la température du cylindre chauffant (10) est avantageusement comprise entre 70°C et 90°C, de préférence entre 75°C et 80°C.

10. Procédé, suivant la revendication 1, caractérisé en ce que le chauffage de la couche (3) de paraffine ou de cire est réalisé par passage du papier (1) avec la couche (3) dans un dispositif de chauffage par rayonnement disposé avant le poste (9) de tamisage ou de pulvérisation.

11. Procédé, suivant l'une quelconque des revendications 7 à 10, caractérisé en ce que l'ensemble papier (1) - couche de cire ou de paraffine (3) passe avantageusement sur le cylindre chauffant (10) ou dans le dispositif de chauffage par rayonnement à une vitesse comprise entre 120 m/min et 150 m/min.

**Patentansprüche**

1. Verfahren zur Herstellung eines Verpackungsmaterials, insbesondere für Weichkäse, bestehend aus mindestens einer Papierlage (1) deren dem Käse (6) zugewandte Seite (2) entweder mit einer Paraffin- oder Wachsschicht (3) oder mit einer Lack- oder Firnisschicht (3') bestrichen ist, dadurch gekennzeichnet, daß es darin besteht, entweder auf die Paraffin- oder Wachsschicht (3) oder auf die Lack- oder Firnisschicht (3') organische Kasein- oder Stärkepartikel (4) aufzusprühen oder aufzusieben, deren durchschnittlicher Durchmesser zwischen 4 μm und 22 μm liegt, und den Wasserdampf-Durchsatz durch die Verpackung kontrollieren zu können, wobei das Aufsprühen oder Aufsieben entweder direkt nach dem Aufbringen der Paraffin- oder Wachsschicht (3) oder der Lack- oder Firnisschicht (3') vor der Kristallisierung oder Trocknung der besagten Schichten (3 oder 3'), oder, im Falle eines vorher auf der Seite (2) des Papiers (1) mit einer Paraffin- oder Wachsschicht (3) versehenen Verpackungsmaterials, nach Erwärmung der besagten Schicht (3), durchgeführt wird.

2. Verfahren zur Herstellung eines Verpackungsmaterials nach Anspruch 1, dadurch gekennzeichnet, daß polymere Teilchen (5) in das Paraffin- oder Wachsbad, Lack- oder Firnisbad eingebracht werden.

3. Verfahren zur Herstellung eines Verpackungsmaterials nach einem der Ansprüche 1 oder 2, dadurch gekennzeichnet, daß es darin besteht, die polymeren Teilchen (5) gegebenenfalls einem Paraffin- oder Wachsbad, Lack- oder Firnisbad in einem Verhältnis von 1 bis 25 Gewichts-%, genauer gesagt von 5 bis 15 Gewichts-% beizugeben, Papier (1), dessen Flächemasse zwischen 18 und 50 g/m² liegt, wobei das Streichen in einem Verhältnis von 4 bis 15 g/m² stattfindet, mit diesem Paraffin- oder Wachsbad, Lack- oder Firnisbad zu bestreichen, auf der Paraffin- oder Wachsschicht, Lack- oder Firnisschicht hydrophile organische Kasein- oder Stärkepartikel (4) in einem Verhältnis von 0,5 g/m² bis 6 g/m², genauer gesagt von 1 g/m² bis 3 g/m² durch Aufsprühen oder Aufsieben abzulagern.

4. Verfahren zur Herstellung eines Verpackungsmaterials nach Anspruch 3, dadurch gekennzeichnet, daß es darin besteht, die der Seite (2) des bestrichenen Papiers (1) gegenüberliegende Seite (2') teilweise mittels Leim- oder Wachsstreifen entweder auf ein anderes Papier oder auf einen perforierten oder nicht perforierten Zellulosefilm, oder auf ein mehrteiliges, perforiertes oder nicht perforiertes Aluminiumpapier, oder schließlich auf einen perforierten oder nicht perforierten, metallisierten oder nicht metallisierten, ein- oder mehrschichtigen Polymerfilm aufzukleben.

5. Verfahren zur Herstellung eines Verpackungsmaterials nach Anspruch 3, dadurch gekennzeichnet, daß es darin besteht, auf der gesamten, der Fläche (2) gegenüberliegenden Fläche (2') des bestrichenen Papiers (1), mittels Leim oder Wachs, eine perforierte oder nicht perforierte Aluminiumfolie aufzubringen.

6. Verfahren nach einem der Ansprüche 1 bis 5, dadurch gekennzeichnet, daß die Temperatur des Paraffins oder des Wachses (3), während des Aufsprühens oder Aufsiebens der hydrophilen Kasein- oder Stärkepartikel (4) zwischen 55°C und 65°C, vorzugsweise zwischen 55°C und 60°C eingestellt ist.

7. Verfahren nach Anspruch 6, dadurch gekennzeichnet, daß die Temperatureinstellung direkt in Höhe der Streichmaschine (7) vorgenommen wird, wobei ein Kühlzylinder (8) die Kristallisierung des Paraffins oder des Wachses nach dem Sieb- oder Sprühgang (9) vollendet.

8. Verfahren nach Anspruch 1, dadurch gekennzeichnet, daß im Falle der Verwendung eines vorher auf der Seite (2) mit einer Schicht (3) aus Paraffin oder Wachs versehenen Papiers (1), dieses letztere vorteilhaft, über eine vor der Sieb- oder Sprühstation (9) angeordnete Heiztrommel (10) laufend, erhitzt wird, nach welcher ein Kühlzylinder (8) folgt.

9. Verfahren nach Anspruch 8, dadurch gekennzeichnet, daß die Temperatur der Heiztrommel (10) vorteilhaft zwischen 70°C und 90°C, vorzugsweise zwischen 75°C und 80°C liegt.

10. Verfahren nach Anspruch 1, dadurch gekennzeichnet, daß die Erwärmung der Paraffin- oder Wachsschicht (3) mittels Durchlauf des Papiers (1) mit der Schicht (3) durch eine vor der Sieb- oder Sprühstation angeordnete Strahlungsheizung erfolgt.

11. Verfahren nach einem der Ansprüche 7 bis 10, dadurch gekennzeichnet, daß die Einheit Papier (1) - Wachs- oder Paraffinschicht (3) vorteilhaft über die Heiztrommel (10) oder durch die Strahlungsheizung mit einer Geschwindigkeit zwischen 120 m/min und 150 m/min läuft.

**Claims**

1. Process for manufacturing a packing material, in particular for soft cheese, composed of at least one paper (1), the side (2) of which, facing the cheese (6) is coated either with a layer of paraffin or wax (3), or with a layer of lacquer or varnish (3'), characterised in that it involves spraying or sifting, either on to the layer of paraffin or wax (3) or on to the layer of lacquer or varnish (3'), organic particles (4) of casein or starch, the mean diameter of which is between 4 μm and 22 μm, to allow the passage of steam through the packing to be monitored, spraying or sifting being carried out either directly after application of the layers of paraffin or wax (3) or of lacquer or varnish (3') before crystallisation or drying of said layers (3 or 3') or, in the case of a packing previously provided with a layer of paraffin or wax (3) on the side (2) of the paper (1), after heating said layer (3).

2. Process for manufacturing a packing material according to claim 1, characterised in that polymer particles (5) are introduced into the bath of paraffin or wax, of lacquer or varnish.

3. Process for manufacturing a packing material according to any one of claims 1 or 2, characterised in that it involves adding the polymer particles (5), if applicable, to a bath of paraffin or wax, of lacquer or varnish, in a proportion of 1 to 25% by weight, more specifically 5 to 15% by weight, coating the paper (1), the grammes per square metre of which are between 18 and 50 g/m², with this bath of paraffin or wax, of lacquer or varnish, coating taking place in a proportion of 4 to 15 g/m², depositing hydrophilic organic particles (4) of casein or starch in a proportion of 0.5 g/m² to 6 g/m², more specifically 1 g/m² to 3 g/m², on the layer of paraffin or wax, of lacquer or varnish, by spraying or sifting.

4. Process for manufacturing a packing material according to claim 3, characterised in that it involves partially sticking, by streaks of glue or wax, the side (2') remote from the side (2) of the coated paper (1) either to another paper, or to a perforated or unperforated cellulose film, or to a perforated or unperforated aluminium-paper complex or, finally, to a perforated or unperforated, metallized or nonmetallized, single-layer or multi-layer polymer film.

5. Process for manufacturing a packing material according to claim 3, characterised in that it involves attaching a perforated or unperforated aluminium foil over the entirety of the side (2') remote from the side (2) of the coated paper (1), using glue or wax.

6. Process according to any one of claims 1 to 5, characterised in that the temperature of the paraffin or of the wax (3) during the application of the hydrophilic particles (4) of casein or of starch by spraying or sifting is adjusted to between 55°C and 65°C, preferably between 55°C and 60°C.

7. Process according to claim 6, characterised in that the temperature is controlled directly in the region of the coating machine (7), a cooling cylinder (8) completing the crystallisation of the paraffin or of the way after the sifting or spraying station (9).

8. Process according to claim 1, characterised in that, if a paper (1) previously on its side (2) with a layer (3) of paraffin or wax is used, this layer is advantageously heated by passage over a heating cylinder (10) arranged in front of the sifting or spraying station (9) which is followed by a cooling cylinder (8).

9. Process according to claim 8, characterised in that the temperature of the heating cylinder (10) is advantageously between 70°C and 90°C, preferably between 75°C and 80°C.

10. Process according to claim 1, characterised in that the layer (3) of paraffin or of wax is heated by passing the paper (1) with the layer (3) into a radiant heater arranged in front of the sifting or spraying station (9).

11. Process according to any one of claims 7 to 10, characterised in that the assembly of paper (1) and layer of wax or paraffin (3) advantageously passes over the heating cylinder (10) or into the radiant heater at a speed of between 120 m/min and 150 m/min.

# Fig.1

# Fig. 2

# Fig. 3